# EUROPÄISCHE PATENTANMELDUNG

(11) **EP 3 950 515 A1**
(43) Veröffentlichungstag der Anmeldung: **09.02.2022**
(21) Anmeldenummer: 21178184.4
(22) Anmeldetag: 08.06.2021
(51) Int. Cl.: B65B 53/06, B65B 57/08, B65B 21/24, B65B 65/00, B65B 59/00, B65B 59/02, B65B 11/10, G05B 13/00

(54) **VERFAHREN UND VERPACKUNGSVORRICHTUNG ZUM HERSTELLEN VON SCHRUMPFGEBINDEN**

(30) Priorität: 06.08.2020 DE 102020120820
(71) Anmelder: Krones Aktiengesellschaft, 93073 Neutraubling (DE)
(72) Erfinder: KREIS, Marcus, 93073 Neutraubling (DE); HAIDACHER, Peter, 93073 Neutraubling (DE); SPINDLER, Herbert, 93073 Neutraubling (DE)
(74) Vertreter: Benninger, Johannes

(57) **Zusammenfassung**

Es ist eine Verpackungsvorrichtung (1) zum Herstellen von Schrumpfgebinden offenbart. Die Verpackungsvorrichtung (1) umfasst einen Schrumpftunnel (30) mit mindestens einer Schachtwand (32, 33, 34), welche mindestens eine Schachtwand (32, 33, 34) zum Einbringen von Schrumpfmedium in den Schrumpftunnel (30) ausgebildet ist und entlang welcher mindestens einen Schachtwand (32, 33, 34) Artikel (15) zum Aufschrumpfen von thermoplastischem Verpackungsmaterial (9) durch den Schrumpftunnel (30) bewegbar sind.

Weiter umfasst die Verpackungsvorrichtung (1) eine Steuer- und/oder Regeleinrichtung (S) und mindestens eine Sensorik (20), über welche mindestens eine Sensorik (20) der Steuer- und/oder Regeleinrichtung (S) Informationen zu einer Breite des thermoplastischen Verpackungsmaterials (9) bereitstellbar sind, über welche Breite sich das thermoplastische Verpackungsmaterial (9) bei seiner Bewegung durch den Schrumpftunnel (30) senkrecht zu seiner Bewegungsrichtung (BR) erstreckt.

Die Steuer- und/oder Regeleinrichtung (S) steht mit wenigstens einem Aktor in Verbindung und ist derart ausgebildet, dass die Steuer- und/oder Regeleinrichtung (S) unter Berücksichtigung der über die mindestens eine Sensorik (20) bereitgestellten Informationen eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, über den wenigstens einen Aktor einstellen kann.

## Beschreibung

Die vorliegende Erfindung ein Verfahren und eine Verpackungsvorrichtung zum Herstellen von Schrumpfgebinden.

Es ist bekannt, Artikel wie Getränkebehälter zum Zwecke des Transportes in handlichen Gebinden mit vier, sechs oder mehr Behältern zusammenzufassen, wobei die Behälter in diesen Gebinden mit Schrumpffolie umhüllt und zusammengehalten sein können. Das jeweilige Behältnis, bei welchem es sich beispielsweise um eine PET-Flasche oder Glasflasche handeln kann, bildet hierbei eine Primärverpackung aus, in welcher das jeweilige Getränk bzw. die jeweilige Flüssigkeit sicher aufgenommen ist. Die Schrumpffolie kann eine Sekundärverpackung ausbilden, welche die als PET-Flasche oder Glasflasche ausgebildeten Primärverpackungen zusammen mit der aufgenommenen Flüssigkeit bzw. dem jeweiligen aufgenommenen Getränk zusammenhält.

Um die Schrumpffolie auf Artikel aufbringen zu können, werden Zusammenstellungen an Artikeln zusammen mit aufgelegtem thermoplastischem Verpackungsmaterial durch einen Schrumpftunnel bewegt, worin das thermoplastische Verpackungsmaterial auf die jeweilige Zusammenstellung an Artikeln aufgeschrumpft wird. Ein solcher Schrumpftunnel besitzt mindestens eine Schachtwand, welche mit Düsen zum Einbringen eines Heißgasvolumenstroms in einen Innenraum des Schrumpftunnels versehen ist. Der Heißgasvolumenstrom wird mittels dieser Düsen gegen das thermoplastische Verpackungsmaterial geführt. Ein solcher Schrumpftunnel ist beispielsweise aus der DE 10 2013 103 863 A1 bekannt.

Damit die Schrumpffolie die einzelnen Artikel stabil zusammenhalten kann, ist es notwendig, dass der Heißgasvolumenstrom mit definiertem Betrag, definierter Richtung und definierter Temperatur gegen das thermoplastische Verpackungsmaterial geführt wird. Sofern solche Prozessparameter aus bestimmten Gründen abweichen bzw. sich über den Zeitverlauf verändern, kann es sein, dass die Schrumpffolie an diversen Stellen ungewollt zu Faltenbildung neigt, an diversen Stellen einreißt oder ggf. keine ausreichende Stabilität zum Zusammenhalten der jeweiligen Artikel einer Zusammenstellung bereitstellen kann. Um dies sicherstellen zu können, sind in Schachtwände des Schrumpftunnels, welche sich entlang einer Bewegungsrichtung der Artikel erstrecken, mehrere Öffnungen mit bestimmtem Durchmesser an definierten Stellen in die Schachtwand eingebracht. Auch werden die Artikel zusammen mit dem aufgelegten thermoplastischen Verpackungsmaterial in definiertem Abstand entlang einer jeweiligen Schachtwand geführt. Bereits geringe Beeinträchtigungen von Prozessparametern zeigen ein unterschiedliches Schrumpfergebnis. Eine über die Zeit gleichbleibende Qualität des Schrumpfergebnisses wäre aber wünschenswert.

Das thermoplastische Verpackungsmaterial, welches auf Artikel aufgeschrumpft wird, besitzt eine bestimmte Größe, wobei die vorherig erwähnten Prozessparameter bzw. die Öffnungen der Schachtwände und die Position der Schachtwände im Schrumpftunnel auf die bestimmte Größe des thermoplastischen Verpackungsmaterials abgestimmt werden müssen, um das thermoplastische Verpackungsmaterial mit zufriedenstellender Qualität auf Zusammenstellungen an Artikeln aufschrumpfen zu können.

Die Praxis hat gezeigt, dass die Dimensionierung des thermoplastischen Verpackungsmaterials innerhalb bestimmter Bereiche von einer gewünschten bzw. für das thermoplastische Verpackungsmaterial vorgegebenen Dimensionierung abweicht. Eine solche Abweichung kann zwar innerhalb gewisser Fertigungstoleranzen liegen, beeinflusst jedoch das Schrumpfergebnis in der Regel nachteilig.

So kann es beispielsweise sein, dass Zuschnitte an thermoplastischem Verpackungsmaterial, welche vor dem Aufschrumpfen auf Zusammenstellung an Artikeln aufgelegt werden, ungenau abgetrennt werden und somit eine Größe besitzen, die innerhalb gewisser Bereiche von einer erwarteten Größe abweicht. Auch kann es in der Praxis sein, dass die Größe des ggf. noch auf einer Vorratsrolle aufgewickelten thermoplastischen Verpackungsmaterials nicht exakt mit einer Größe übereinstimmt, welche für das thermoplastische Verpackungsmaterial erwartet wird. Bei der Fertigung bzw. Herstellung des thermoplastischen Verpackungsmaterials kann somit eine Abweichung der Größe innerhalb gewisser Toleranzbereiche die Regel sein. Eine solche Abweichung wird im Schrumpfprozess nicht berücksichtigt und kann, wie vorhergehend bereits erwähnt, die Qualität der auf Artikel mittels des Schrumpftunnels aufgeschrumpften Schrumpffolie nachteilig beeinflussen.

Eine Aufgabe der Erfindung kann aus diesem Grunde darin gesehen werden, eine Verpackungsvorrichtung und ein Verfahren breitzustellen, welche das Schrumpfergebnis im Hinblick auf eine konstante Qualität des aufgeschrumpften thermoplastischen Verpackungsmaterials zumindest verbessern. Die Verpackungsvorrichtung soll zudem einen einfachen Aufbau besitzen und das Verfahren einfach umgesetzt werden können.

Diese Aufgaben werden mit einer Verpackungsvorrichtung und einem Verfahren gelöst, welche die Merkmale in den unabhängigen Ansprüchen umfassen. Weitere vorteilhafte Ausgestaltungen werden durch die Unteransprüche beschrieben.

Die Erfindung betrifft ein Verfahren zum Herstellen von Schrumpfgebinden. Bei dem Verfahren ist vorgesehen, dass Artikel mit aufgebrachtem thermoplastischem Verpackungsmaterial durch einen Schrumpftunnel entlang mindestens einer zum Einbringen von Schrumpfmedium in den Schrumpftunnel ausgebildeten Schachtwand bewegt werden. In diversen Ausführungsformen kann es sein, dass der Schrumpftunnel genau eine Schachtwand besitzt, wobei zwischen der genau einen Schachtwand und einem die Peripherie des Schrumpftunnels bereitstellendem Schrumpftunnelgehäuse mindestens Gasse ausgebildet ist, entlang welcher mindestens einen Gasse Artikel mit aufgebrachtem thermoplastischem Verpackungsmaterial durch den Schrumpftunnel bewegt werden.

In weiteren Ausführungsformen kann der Schrumpftunnel mindestens zwei Schachtwände umfassen, wobei zwischen den mindestens zwei Schachtwänden mindestens eine Gasse ausgebildet ist, entlang welcher mindestens einen Gasse Artikel mit aufgebrachtem thermoplastischem Verpackungsmaterial durch den Schrumpftunnel bewegt werden. Die mindestens eine Schachtwand kann zum Einbringen von Schrumpfmedium in den Schrumpftunnel mindestens eine Öffnung ausbilden. In bevorzugten Ausführungsformen bildet die mindestens eine Schachtwand zum Einbringen von Schrumpfmedium in den Schrumpftunnel mehrere Öffnungen aus.

Bei den Artikeln, welche mit aufgebrachtem thermoplastischem Verpackungsmaterial durch den Schrumpftunnel entlang der mindestens einen zum Einbringen von Schrumpfmedium in den Schrumpftunnel ausgebildeten Schachtwand bewegt werden, kann es sich um Getränkebehälter und insbesondere um Getränkeflaschen bzw. PET-Getränkeflaschen und/oder um Getränkedosen handeln.

Weiter ist vorgesehen, dass eine Steuer- und/oder Regeleinrichtung Informationen zu einer Breite des thermoplastischen Verpackungsmaterials bereitgestellt werden, über welche Breite sich das thermoplastische Verpackungsmaterial bei seiner Bewegung durch den Schrumpftunnel senkrecht zu seiner Bewegungsrichtung erstreckt.

Auch ist vorgesehen, dass die Steuer- und/oder Regeleinrichtung unter Berücksichtigung der Informationen zur Breite des thermoplastischen Verpackungsmaterials eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, aktuatorisch einstellt.

Es kann hierbei sein, dass die Steuer- und/oder Regeleinrichtung die Position der mindestens einen Schachtwand schräg und/oder senkrecht zur Bewegungsrichtung einstellt aktuatorisch einstellt und dass die Steuer- und/oder Regeleinrichtung die Schachtwand zudem dreht, kippt und/oder auf eine andere Art und Weise eine Position der Schachtwand verändert.

Auf der Steuer- und/oder Regeleinrichtung können Angaben zu einem vorgegebenen Soll-Abstand hinterlegt sein, welcher zwischen der mindestens einen Schachtwand und dem thermoplastischen Verpackungsmaterial bei seiner Bewegung durch den Schrumpftunnel senkrecht zu seiner Bewegungsrichtung auszubilden ist. Hierbei kann es sein, dass die Steuer- und/oder Regeleinrichtung unter Berücksichtigung der Informationen zur Breite des thermoplastischen Verpackungsmaterials eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, aktuatorisch einstellt und hierbei an den Soll-Abstand anpasst. Es kann somit sein, dass ein Abstand zwischen thermoplastischem Verpackungsmaterial, welches durch den Schrumpftunnel bewegt wird, und der mindestens einen Schachtwand auch dann konstant gehalten wird, wenn sich die Breite des thermoplastischen Verpackungsmaterials ggf. ändert.

Es kann sein, dass der Steuer- und/oder Regeleinrichtung die Informationen zu einer Breite des thermoplastischen Verpackungsmaterials bereitgestellt werden, bevor thermoplastisches Verpackungsmaterial auf Artikel aufgeschrumpft wird bzw. bevor der Schrumpftunnel zum Aufschrumpfen von thermoplastischem Verpackungsmaterial auf Artikel in Betrieb genommen wird. Hierbei kann es sein, dass die Steuer- und/oder Regeleinrichtung unter Berücksichtigung der Informationen eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, aktuatorisch einstellt, bevor thermoplastisches Verpackungsmaterials auf Artikel aufgeschrumpft wird bzw. bevor der Schrumpftunnel zum Aufschrumpfen von thermoplastischem Verpackungsmaterial auf Artikel in Betrieb genommen wird.

Es kann sein, dass die Informationen zur Breite des thermoplastischen Verpackungsmaterials sensorisch bereitgestellt werden, indem mindestens eine mit der Steuer- und/oder Regeleinrichtung gekoppelte Sensorik wenigstens eine Ist-Position wenigstens einer in Bewegungsrichtung verlaufenden seitlichen Außenkante des auf Artikel aufgebrachten thermoplastischen Verpackungsmaterials erkennt. Hierbei kann es sein, dass das auf Artikel aufgebrachte thermoplastische Verpackungsmaterial zwei jeweils in Bewegungsrichtung verlaufende seitliche Außenkanten ausbildet, wobei die Informationen zur Breite des thermoplastischen Verpackungsmaterials sensorisch bereitgestellt werden, indem mindestens eine mit der Steuer- und/oder Regeleinrichtung gekoppelte Sensorik eine jeweilige Ist-Position der zwei jeweils in Bewegungsrichtung verlaufenden seitlichen Außenkanten jeweils erkennt. Jeder der zwei jeweils in Bewegungsrichtung verlaufenden seitlichen Außenkanten kann zum Erkennen ihrer jeweiligen Ist-Position eine eigene Sensorik zugeordnet sein.

Auch ist denkbar, dass das thermoplastische Verpackungsmaterial entlang seiner Längsrichtung in zwei nebeneinander verlaufende Bahnen aufgetrennt wird. Hierbei kann es sein, dass für jede der zwei nebeneinander verlaufenden Bahnen jeweils eine mit der Steuer- und/oder Regeleinrichtung gekoppelte Sensorik eine Ist-Position wenigstens einer in Bewegungsrichtung verlaufenden seitlichen Außenkante erkennt. Auch eine jeweilige Bahn an thermoplastischem Verpackungsmaterial kann zwei jeweils in Bewegungsrichtung verlaufende seitliche Außenkanten ausbilden, wobei die Informationen zur Breite des thermoplastischen Verpackungsmaterials sensorisch bereitgestellt werden, indem jeder dieser Außenkanten eine eigene Sensorik zugeordnet wird, welche eine jeweilige Ist-Position der jeweiligen in Bewegungsrichtung verlaufenden seitlichen Außenkante jeweils erkennt.

In diversen Ausführungsformen des erfindungsgemäßen Verfahrens und in diversen Ausführungsformen der nachfolgend noch beschriebenen erfindungsgemäßen Verpackungsvorrichtung kann ein Speicher vorgesehen sein, welcher das thermoplastische Verpackungsmaterial aufgewickelt auf einer Vorratsrolle bereitstellt. Der Speicher kann mindestens einen Haltedorn besitzen, auf welchem die Vorratsrolle mit dem aufgewickelten thermoplastischen Verpackungsmaterial aufsitzt und welcher zum Abwickeln des thermoplastischen Verpackungsmaterials drehend bewegt wird.

Auch kann es sein, dass die Informationen zur Breite des thermoplastischen Verpackungsmaterials sensorisch bereitgestellt werden, indem mindestens eine mit der Steuer- und/oder Regeleinrichtung gekoppelte Sensorik wenigstens eine Ist-Position wenigstens einer in Bewegungsrichtung verlaufenden seitlichen Außenkante des bis dahin noch nicht auf Artikel aufgebrachten thermoplastischen Verpackungsmaterials erkennt. Hierbei kann es sein, dass das noch nicht auf Artikel aufgebrachte thermoplastische Verpackungsmaterial zwei jeweils in Bewegungsrichtung verlaufende seitliche Außenkanten ausbildet, wobei die Informationen zur Breite des noch nicht auf Artikel aufgebrachten thermoplastischen Verpackungsmaterials sensorisch bereitgestellt werden, indem mindestens eine mit der Steuer- und/oder Regeleinrichtung gekoppelte Sensorik eine jeweilige Ist-Position der zwei jeweils in Bewegungsrichtung verlaufenden seitlichen Außenkanten jeweils erkennt.

Jeder der zwei jeweils in Bewegungsrichtung verlaufenden seitlichen Außenkanten kann zum Erkennen ihrer jeweiligen Ist-Position eine eigene Sensorik zugeordnet sein. Beispielsweise kann es hierbei sein, dass mindestens eine mit der Steuer- und/oder Regeleinrichtung gekoppelte Sensorik wenigstens eine Ist-Position wenigstens einer in Bewegungsrichtung verlaufenden seitlichen Außenkante des bis dahin noch nicht auf Artikel aufgebrachten und noch auf der Vorratsrolle aufgewickelten thermoplastischen Verpackungsmaterials erkennt.

Alternativ oder ergänzend hierzu kann es sein, dass mindestens eine mit der Steuer- und/oder Regeleinrichtung gekoppelte Sensorik wenigstens eine Ist-Position wenigstens einer in Bewegungsrichtung verlaufenden seitlichen Außenkante des bis dahin noch nicht auf Artikel aufgebrachten, jedoch bereits von der Vorratsrolle abgewickelten thermoplastischen Verpackungsmaterials erkennt.

In diversen Ausführungsformen des erfindungsgemäßen Verfahrens und/oder in diversen Ausführungsformen der erfindungsgemäßen Verpackungsvorrichtung kann ein Einschlagmodul vorgesehen sein, welches Zuschnitte an thermoplastischem Verpackungsmaterial von einem mit der Vorratsrolle verbundenem Endlosstrang an thermoplastischem Verpackungsmaterial abtrennt und sodann auf Artikel auflebt bzw. sodann auf Artikel aufbringt. Hierbei kann es sein, dass die mindestens eine mit der Steuer- und/oder Regeleinrichtung gekoppelte Sensorik im Hinblick auf die Bewegungsrichtung bzw. Laufrichtung des thermoplastischen Verpackungsmaterials zwischen dem vorherig erwähnten Speicher und dem Einschlagmodul positioniert bzw. angeordnet ist.

Somit ist denkbar, dass das thermoplastische Verpackungsmaterial von einer Vorratsrolle abgewickelt wird, wobei
- die Informationen zur Breite des thermoplastischen Verpackungsmaterials sensorisch bereitgestellt werden, indem mindestens eine mit der Steuer- und/oder Regeleinrichtung gekoppelte Sensorik wenigstens eine Ist-Position wenigstens einer in Bewegungsrichtung verlaufenden seitlichen Außenkante des thermoplastischen Verpackungsmaterials erkennt, welches thermoplastische Verpackungsmaterial bis dahin noch nicht auf Artikel aufgebracht wurde, bereits von der Vorratsrolle abgewickelt ist und mit einem von der Vorratsrolle getragenem Vorrat an thermoplastischem Verpackungsmaterial verbunden ist.

Bei der mindestens einen mit der Steuer- und/oder Regeleinrichtung gekoppelten Sensorik kann es sich um mindestens eine Lichtschranke und/oder um mindestens ein Kamerasystem handeln. Darüber hinaus ist auch denkbar, dass die mindestens eine mit der Steuer- und/oder Regeleinrichtung gekoppelte Sensorik mindestens einen Tastsensor umfasst, gegen welchen mindestens einen Tastsensor eine in Bewegungsrichtung verlaufende seitliche Außenkante des thermoplastischen Verpackungsmaterials geführt wird und welcher mindestens eine Tastsensor hierdurch der Steuer- und/oder Regeleinrichtung Informationen zu einer Breite des thermoplastischen Verpackungsmaterials sensorisch bereitstellt.

Weiter kann es sein, dass die Steuer- und/oder Regeleinrichtung unter Berücksichtigung der Informationen zur Breite des thermoplastischen Verpackungsmaterials eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, aktuatorisch einstellt, während der Schrumpftunnel thermoplastisches Verpackungsmaterial auf die Artikel aufschrumpft. Hierbei kann es sein, dass der Steuer- und/oder Regeleinrichtung Informationen zu einer Breite des thermoplastischen Verpackungsmaterials sensorisch bereitgestellt werden, während der Schrumpftunnel thermoplastisches Verpackungsmaterial auf die Artikel aufschrumpft.

Denkbar ist, dass der Steuer- und/oder Regeleinrichtung Informationen zur Breite des thermoplastischen Verpackungsmaterials über den Zeitverlauf kontinuierlich sensorisch bereitgestellt werden. Hierbei kann es sein, dass die Steuer- und/oder Regeleinrichtung unter Berücksichtigung der über den Zeitverlauf kontinuierlich sensorisch bereitgestellten Informationen eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, bedarfsweise aktuatorisch einstellt, sofern die Steuer- und/oder Regeleinrichtung mittels der kontinuierlich sensorisch bereitgestellten Informationen feststellt, dass eine Ist-Breite des thermoplastischen Verpackungsmaterials von einer vorgegebenen Soll-Breite abweicht. Es ist somit vorstellbar, dass der Steuer- und/oder Regeleinrichtung Informationen zur Breite des thermoplastischen Verpackungsmaterials über den Zeitverlauf kontinuierlich sensorisch bereitgestellt werden, wobei die Steuer- und/oder Regeleinrichtung unter Berücksichtigung der über den Zeitverlauf kontinuierlich sensorisch bereitgestellten Informationen eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, im Rahmen einer Regelung bedarfsweise aktuatorisch einstellt.

Vorstellbar ist, dass der Steuer- und/oder Regeleinrichtung Informationen zu einer Breite des bis dahin noch nicht in den Schrumpftunnel eingetretenen thermoplastischen Verpackungsmaterials sensorisch bereitgestellt werden, über welche Breite sich das bis dahin noch nicht in den Schrumpftunnel eingetretene thermoplastische Verpackungsmaterial bei seiner späteren Bewegung durch den Schrumpftunnel senkrecht zu seiner Bewegungsrichtung erstreckt. Hierbei kann es sein, dass die Steuer- und/oder Regeleinrichtung unter Berücksichtigung der Informationen zur Breite des bis dahin noch nicht in den Schrumpftunnel eingetretenen thermoplastischen Verpackungsmaterials eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, aktuatorisch einstellt und hierbei eine Zeit bzw. Zeitdauer berücksichtigt, welche das bis dahin noch nicht in den Schrumpftunnel eingetretene thermoplastische Verpackungsmaterial bis zu seinem Eintritt in den Schrumpftunnel noch benötigt.

Auch kann es sein, dass die Steuer- und/oder Regeleinrichtung anhand der sensorisch bereitgestellten Informationen überprüft, ob sich eine Ist-Breite des thermoplastischen Verpackungsmaterials im Hinblick auf die Ist-Position der mindestens einen Schachtwand innerhalb eines vorgegebenen Toleranzbereichs befindet. Hierbei kann es sein, dass die Steuer- und/oder Regeleinrichtung eine Position der mindestens einen Schachtwand lediglich dann schräg und/oder senkrecht zur Bewegungsrichtung einstellt, sofern der Toleranzbereich von der Ist-Breite des thermoplastischen Verpackungsmaterials verlassen wird.

Die Erfindung betrifft darüber hinaus eine Verpackungsvorrichtung zum Herstellen von Schrumpfgebinden. Merkmale, welche vorhergehend bereits zu diversen Ausführungsformen des erfindungsgemäßen Verfahrens genannt wurden können ebenso bei den nachfolgend beschriebenen Ausführungsformen der erfindungsgemäßen Verpackungsvorrichtung vorgesehen sein und werden nicht mehrfach erwähnt. Ebenso können die nachfolgend zu diversen Ausführungsformen der erfindungsgemäßen Verpackungsvorrichtung beschriebenen Merkmale bei den diversen Ausführungsformen des vorhergehend bereits beschriebenen Verfahrens vorgesehen sein. Die Verpackungsvorrichtung kann ggf. zur Durchführung der vorherig beschriebenen Ausführungsformen des erfindungsgemäßen Verfahrens ausgebildet sein.

Die Verpackungsvorrichtung umfasst einen Schrumpftunnel mit mindestens einer Schachtwand, welche mindestens eine Schachtwand zum Einbringen von Schrumpfmedium in den Schrumpftunnel ausgebildet ist und entlang welcher mindestens einen Schachtwand Artikel zum Aufschrumpfen von thermoplastischem Verpackungsmaterial durch den Schrumpftunnel bewegbar sind.

Der Schrumpftunnel kann mindestens eine Horizontalfördereinrichtung umfassen, über welche mindestens eine Horizontalfördereinrichtung Artikel zum Aufschrumpfen von thermoplastischem Verpackungsmaterial entlang der mindestens einen Schachtwand durch den Schrumpftunnel bewegbar sind. Weiter kann der Schrumpftunnel ein Schrumpftunnelgehäuse besitzen, durch welches Schrumpftunnelgehäuse Artikel zum Aufschrumpfen von thermoplastischem Verpackungsmaterial bewegbar sind.

Weiter umfasst die Verpackungsvorrichtung eine Steuer- und/oder Regeleinrichtung und mindestens eine Sensorik, über welche mindestens eine Sensorik der Steuer- und/oder Regeleinrichtung Informationen zu einer Breite des thermoplastischen Verpackungsmaterials bereitstellbar sind, über welche Breite sich das thermoplastische Verpackungsmaterial bei seiner Bewegung durch den Schrumpftunnel senkrecht zu seiner Bewegungsrichtung erstreckt. Die mindestens eine Sensorik kann außerhalb des Schrumpftunnels angeordnet sein.

Weiter ist vorgesehen, dass die Steuer- und/oder Regeleinrichtung mit wenigstens einem Aktor in Verbindung steht und derart ausgebildet ist, dass die Steuer- und/oder Regeleinrichtung unter Berücksichtigung der über die mindestens eine Sensorik bereitgestellten Informationen eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, über den wenigstens einen Aktor einstellen kann.

Auf der Steuer- und/oder Regeleinrichtung kann eine Anweisung hinterlegt sein, mittels welcher Anweisung die Steuer- und/oder Regeleinrichtung eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, über den wenigstens einen Aktor während eines laufenden Betriebes des Schrumpftunnels im Rahmen einer Regelung einstellen kann. Eine solche Regelung kann die Position der Schachtwand über den Zeitverlauf durchgehend anpassen, sofern die über die mindestens seine Sensorik der Steuer- und/oder Regeleinrichtung bereitgestellten Informationen zu einer Ist-Breite des thermoplastischen Verpackungsmaterials von einer vorgegebenen Soll-Breite abweichen.

Die mindestens eine Sensorik kann beispielsweise durch mindestens eine Lichtschranke und/oder durch mindestens ein Kamerasystem ausgebildet sein.

Weiter kann die mindestens eine Sensorik ggf. derart positioniert sein, dass die mindestens eine Sensorik wenigstens eine Ist-Position wenigstens einer in Bewegungsrichtung verlaufenden seitlichen Außenkante des auf Artikel aufgebrachten thermoplastischen Verpackungsmaterials erkennen kann, so dass der Steuer- und/oder Regeleinrichtung die jeweilige Ist-Position als Information zur Breite des thermoplastischen Verpackungsmaterials bereitstellbar ist, über welche Breite sich das thermoplastische Verpackungsmaterial bei seiner Bewegung durch den Schrumpftunnel senkrecht zu seiner Bewegungsrichtung erstreckt.

Alternativ oder ergänzend hierzu kann es sein, dass die mindestens eine Sensorik derart positioniert ist, dass die mindestens eine Sensorik eine Ist-Position wenigstens einer in Bewegungsrichtung verlaufenden seitlichen Außenkante des bis dahin noch nicht auf Artikel aufgebrachten thermoplastischen Verpackungsmaterials erkennen kann, so dass der Steuer- und/oder Regeleinrichtung die jeweilige Ist-Position als Information zur Breite des thermoplastischen Verpackungsmaterials bereitstellbar ist, über welche Breite sich das thermoplastische Verpackungsmaterial bei seiner Bewegung durch den Schrumpftunnel senkrecht zu seiner Bewegungsrichtung erstreckt.

Auch kann es sein, dass die mindestens eine Sensorik derart positioniert ist, dass die mindestens eine Sensorik der Steuer- und/oder Regeleinrichtung Informationen zu einer Breite des bis dahin noch nicht in den Schrumpftunnel eingetretenen thermoplastischen Verpackungsmaterials bereitstellen kann. Hierbei kann es sein, dass die Steuer- und/oder Regeleinrichtung bei einer Einstellung der mindestens einen Schachtwand schräg und/oder senkrecht zur Bewegungsrichtung eine Zeit bzw. Zeitdauer berücksichtigen kann, welches das bis dahin noch nicht in den Schrumpftunnel eingetretene thermoplastische Verpackungsmaterial bis zu einem Eintritt in den Schrumpftunnel noch benötigt.

Es ist vorstellbar, dass die Verpackungsvorrichtung wenigstens einen vorzugsweise als Kamera ausgebildeten optischen Detektor umfasst, welcher mit der Steuer- und/oder Regeleinrichtung in Verbindung steht und wobei die Steuer- und/oder Regeleinrichtung das auf Artikel aufgeschrumpfte thermoplastische Verpackungsmaterial mittels des wenigstens einen vorzugsweise als Kamera ausgebildeten optischen Detektors auf das Vorhandensein vorgegebener Gütekriterien überprüfen kann. Solche Gütekriterien können beispielsweise das optische Erscheinungsbild des auf Artikel aufgeschrumpften Verpackungsmaterials betreffen. Sofern das auf Artikel aufgeschrumpfte Verpackungsmaterial mit einer Bedruckung versehen ist, kann es wünschenswert sein, dass diese Bedruckung in bestimmten Bereichen keiner ungewollten Dehnung bzw. Verzerrung unterliegt. Auch kann ein solches Gütekriterium eine Faltenbildung des auf Artikel aufgeschrumpften thermoplastischen Verpackungsmaterials betreffen. Eine Faltenbildung ist in der Praxis unerwünscht, um ein nach Möglichkeit optisch ansprechendes Erscheinungsbild des Schrumpfgebindes sicherstellen zu können.

Weiter kann es hierbei sein, dass auf der Steuer- und/oder Regeleinrichtung Erfahrungswerte hinterlegt sind, welche einer im Rahmen einer Überprüfung festgestellten Abweichung eines Gütekriteriums von einem vorgegebenen Soll-Gütekriterium eine Position der mindestens einen Schachtwand zuordnen. Hierbei kann es sein, dass die Steuer- und/oder Regeleinrichtung unter Berücksichtigung der Erfahrungswerte, welche den im Rahmen der Überprüfung mittels des wenigstens einen vorzugsweise als Kamera ausgebildeten optischen Detektors festgestellten Gütekriterien zugeordnet sind, eine Position der mindestens einen Schachtwand schräg und/oder senkrecht zur Bewegungsrichtung, entlang welcher Bewegungsrichtung das thermoplastische Verpackungsmaterial durch den Schrumpftunnel bewegt wird, über den wenigstens einen Aktor einstellen kann.

Denkbar ist zudem, dass die Verpackungsvorrichtung mindestens eine vorzugsweise als Industrieroboter ausgebildete Handhabungseinrichtung umfasst, an welcher vorzugsweise als Industrieroboter ausgebildeten Handhabungseinrichtung die mindestens eine Sensorik angeordnet ist, so dass die mindestens eine Sensorik über die vorzugsweise als Industrieroboter ausgebildete Handhabungseinrichtung bewegt werden kann. Bei der vorzugsweise als Industrieroboter ausgebildeten Handhabungseinrichtung kann es sich beispielsweise um einen Mehrachsroboter und/oder um einen Deltakinematik-Roboter handeln.

Es sei an dieser Stelle ausdrücklich erwähnt, dass alle Aspekte und Ausführungsvarianten, die im Zusammenhang mit der erfindungsgemäßen Verpackungsvorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Verpackungsvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Verpackungsvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Verpackungsvorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Draufsicht auf eine Ausführungsform einer erfindungsgemäßen Verpackungsvorrichtung und verdeutlicht einzelne Schritte, wie sie bei diversen Ausführungsformen des erfindungsgemäßen Verfahrens vorgesehen sein können.
Fig. 2 zeigt eine schematische Seitenansicht der Ausführungsform einer Verpackungsvorrichtung nach Fig. 1.
Fig. 3 zeigt eine beispielhafte Ausführungsform eines Schrumpfgebindes, wie es mit der erfindungsgemäßen Verpackungsvorrichtung und mit dem erfindungsgemäßen Verfahren hergestellt werden kann.
Fig. 4 zeigt im Flussdiagramm einzelne Schritte, wie sie bei diversen Ausführungsformen des erfindungsgemäßen Verfahrens vorgesehen sein können und mit diversen Ausführungsformen der erfindungsgemäßen Verpackungsvorrichtung umgesetzt bzw. durchgeführt werden können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

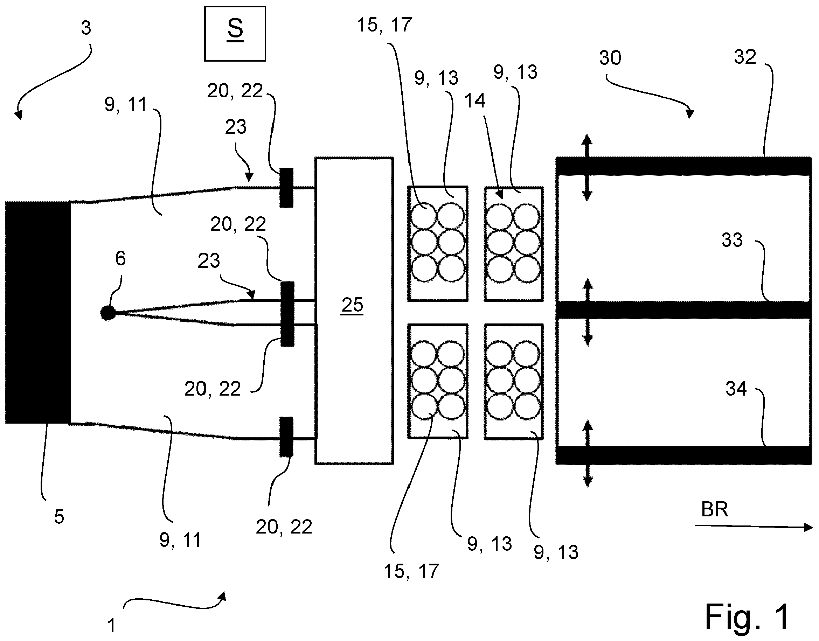

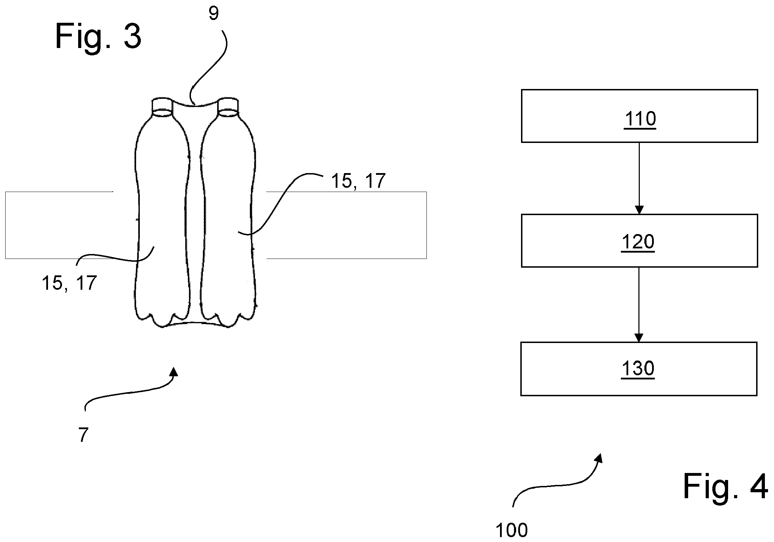

Die Fig. 1 zeigt eine schematische Draufsicht auf eine Ausführungsform einer erfindungsgemäßen Verpackungsvorrichtung 1 und verdeutlicht einzelne Schritte, wie sie bei diversen Ausführungsformen des erfindungsgemäßen Verfahrens 100 (vgl. Fig. 3) vorgesehen sein können.

Die Verpackungsvorrichtung 1 umfasst einen Speicher 3, in welchem im Ausführungsbeispiel nach Fig. 1 genau eine Vorratsrolle 5 angeordnet ist. Die Vorratsrolle 5 trägt einen Endlosstrang an aufgewickeltem thermoplastischem Verpackungsmaterial 9 und sitzt auf einem nicht mit dargestelltem Haltedorn auf.

Von der Vorratsrolle 5 wird thermoplastisches Verpackungsmaterial 9 abgewickelt und abgezogen und sodann über das Schneid- und/oder Trenninstrument 6 in zwei nebeneinander verlaufende Bahnen 11 aufgeteilt. Eine Bewegungsrichtung, entlang welcher das thermoplastische Verpackungsmaterial 9 zu einem späteren Zeitpunkt durch den Schrumpftunnel 30 bewegt wird, ist auf Verweis mit BR angetragen. Eine Laufrichtung der Bahnen 11 des thermoplastischen Verpackungsmaterials 9 verläuft ebenso parallel bzw. fluchtend zur Bewegungsrichtung BR.

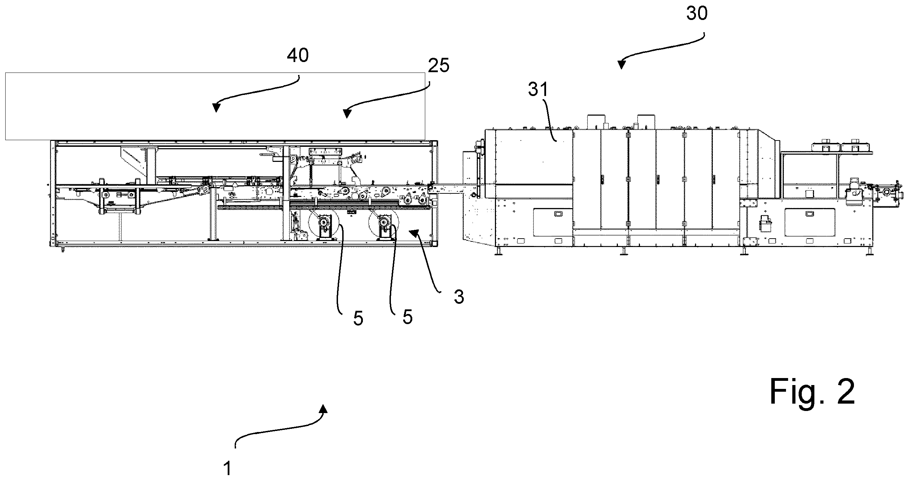

Die Bahnen 11 an thermoplastischem Verpackungsmaterial 9 werden sodann einem Einschlagmodul 25 zugeführt. Das Einschlagmodul 25 trennt Zuschnitte 13 an thermoplastischem Verpackungsmaterial 9 ab und bringt diese auf Artikel 15 auf, welche vorliegend durch Getränkebehälter 17 ausgebildet sind. Mehrere Artikel 15 bzw. vorliegend genau jeweils sechs Artikel 15 bilden eine jeweilige Zusammenstellung an Artikeln 14, die über ein Gruppiermodul 40 entsprechend dem Ausführungsbeispiel nach Fig. 2 hergestellt werden kann. Auf eine jeweilige solche Zusammenstellung an Artikeln 14 wird genau ein jeweiliger Zuschnitt 13 an thermoplastischem Verpackungsmaterial 9 aufgebracht bzw. aufgelegt.

Zusammen mit dem aufgebrachten thermoplastischem Verpackungsmaterial 9 bzw. zusammen mit den aufgebrachten Zuschnitten 13 treten die Artikel 15 sodann in den Schrumpftunnel 30 ein, worin das thermoplastische Verpackungsmaterial 9 bzw. die Zuschnitte 13 auf die Artikel 15 aufgeschrumpft werden. Fig. 1 verdeutlicht hierbei, dass der Schrumpftunnel 30 mehrere Schachtwände 32, 33 und 34 umfasst.

Über die Schachtwände 32, 33 und 34 wird Schrumpfmedium bzw. ein Heißgasvolumenstrom in einen Innenraum des Schrumpftunnels 30 eingebracht. Hierzu besitzen die Schachtwände 32, 33 und 34 jeweils mehrere Öffnungen, über welche Schrumpfmedium bzw. ein Heißgasvolumenstrom gegen das auf Artikel 15 aufgebrachte thermoplastische Verpackungsmaterial 9 geführt werden kann. Die Artikel 15 werden hierzu mit dem aufgebrachten thermoplastischen Verpackungsmaterial 9 zwischen zwei benachbarten Schachtwänden 32, 33 und 34 durch den Schrumpftunnel 30 transportiert.

In der Praxis kann es sein, dass eine Breite des thermoplastischen Verpackungsmaterials 9, welches von der Vorratsrolle 5 getragen wird und später als Zuschnitt 13 in den Schrumpftunnel 30 eintritt, von einer erwarteten Breite abweicht. Durch Fertigungstoleranzen kann bereits das noch auf der Vorratsrolle 5 aufgewickelte thermoplastische Verpackungsmaterial 9 eine senkrecht zur Bewegungsrichtung BR orientierte Breite besitzen, die sich von einer erwarteten Breite geringfügig unterscheidet.

Dies kann sich nachteilig auf den Schrumpfprozess auswirken, da der mittels des Schrumpftunnels 30 durchzuführende Schrumpfprozess auf die erwartete Breite für das thermoplastische Verpackungsmaterial 9 abgestimmt ist. Im Stand der Technik wird eine relative Beabstandung der Schachtwände 32, 33 und 34 zueinander fest eingestellt und auf die erwartete Breite abgestimmt.

Sofern die tatsächliche Breite aufgrund von Fertigungstoleranzen nicht der erwarteten Breite entspricht oder sofern sich die Breite des von der Vorratsrolle 5 abgewickelten thermoplastischen Verpackungsmaterials 9 über den Zeitverlauf sogar ändert, kann die Qualität des Schrumpfergebnisses unbefriedigend sein. Mittels der Verpackungsvorrichtung 1 können solche Probleme vermieden werden.

Hierzu läuft jede Bahn 11 an thermoplastischem Verpackungsmaterial 9 durch den Erfassungsbereich mindestens einer Sensorik 20, welche vorliegend als Lichtschranke 22 ausgebildet ist, jedoch in weiteren Ausführungsformen auch als Kamerasystem, als Tastsensor oder durch eine weitere Sensorik ausgebildet sein kann. Die jeweilige Sensorik 20 bzw. die jeweilige Lichtschranke 22 steht mit einer Steuer- und/oder Regeleinrichtung S in Verbindung.

Jede Bahn 11 an thermoplastischem Verpackungsmaterial 9 bildet zwei jeweils in Bewegungsrichtung BR verlaufende seitliche Außenkanten 23 aus. Jeder dieser jeweils in Bewegungsrichtung BR verlaufenden seitlichen Außenkanten 23 ist eine eigene Sensorik 20 bzw. eine eigene Lichtschranke 22 zugeordnet. Die jeweilige eigene Sensorik 20 bzw. die jeweilige eigene Lichtschranke 22 kann der Steuer- und/oder Regeleinrichtung S Informationen zu einer Breite des thermoplastischen Verpackungsmaterials 9 bzw. der Bahn 11 bereitstellen, indem die jeweilige eigene Sensorik 20 eine Ist-Position der jeweiligen in Bewegungsrichtung BR verlaufenden seitlichen Außenkante 23 erkennt. Eine relative Beabstandung der in Bewegungsrichtung BR verlaufenden seitlichen Außenkanten 23 zueinander entspricht hierbei einer tatsächlichen Breite, welche das thermoplastische Verpackungsmaterial 9 als Zuschnitt 13 bei seiner Bewegung durch den Schrumpftunnel 30 ausbildet.

Die Steuer- und/oder Regeleinrichtung S ist in der Lage, unter Berücksichtigung der Informationen zur Breite des thermoplastischen Verpackungsmaterial 9, welche Informationen die Steuer- und/oder Regeleinrichtung S von der jeweiligen Sensorik 20 erhalten hat, eine Position der Schachtwände 32, 33 und 34 jeweils senkrecht zur Bewegungsrichtung BR einzustellen.

Die Einstellung einer jeweiligen Position der Schachtwände 32, 33 und 34 erfolgt hierbei vorzugsweise derart, dass das thermoplastische Verpackungsmaterial 9 bzw. der Zuschnitt 13, welcher auf Artikel 15 aufgebracht ist, mit einem vorgegebenem Soll-Abstand zu den jeweiligen Schachtwänden 32, 33 und 34 durch den Schrumpftunnel 30 in Bewegungsrichtung BR transportiert werden kann.

Sofern die Steuer- und/oder Regeleinrichtung S beispielsweise feststellt, dass eine tatsächliche Breite des thermoplastischen Verpackungsmaterials 9 gegenüber einer erwarteten Breite vergrößert ist, kann die Steuer- und/oder Regeleinrichtung S einen relativen Abstand zweier benachbarter Schachtwände 32, 33 bzw. 34 zueinander vergrößern. Sofern die Steuer- und/oder Regeleinrichtung S beispielsweise feststellt, dass eine tatsächliche Breite des thermoplastischen Verpackungsmaterial 9 gegenüber einer erwarteten Breite verkleinert ist, kann die Steuer- und/oder Regeleinrichtung S einen relativen Abstand zweier benachbarter Schachtwände 32, 33 bzw. 34 zueinander verkleinern.

Sofern die Steuer- und/oder Regeleinrichtung S beispielsweise feststellt, dass eine tatsächliche Breite des thermoplastischen Verpackungsmaterials 9 mit einer erwarteten Breite bzw. Soll-Breite übereinstimmt, kann die Steuer- und/oder Regeleinrichtung S den relativen Abstand 32, 33 bzw. 34 ohne eine aktuatorische Einstellung beibehalten. Bewährt hat es sich, wenn die Steuer- und/oder Regeleinrichtung S den relativen Abstand der Schachtwände 32, 33 und 34 zueinander derart einstellt, dass das thermoplastische Verpackungsmaterial 9 bei seiner Bewegung durch den Schrumpftunnel 30 durchgehend einen fest vorgegebenen Abstand zu den Schachtwänden 32, 33 und 34 besitzt.

Sofern sich also die Breite des thermoplastischen Verpackungsmaterials mit der Zeit reduzieren sollte, kann ein relativer Abstand der Schachtwände 32, 33 und 34 zueinander ebenso verkleinert bzw. reduziert werden, so dass auch bei sich verkleinernder Breite des thermoplastischen Verpackungsmaterials 9 der fest vorgegebene Abstand zwischen dem thermoplastischen Verpackungsmaterial 9 und der jeweiligen Schachtwand 32, 33 und 34 beibehalten wird. Hierdurch kann auf einfache Art und Weise ein Schrumpfergebnis mit gleichbleibender Qualität über den Zeitverlauf auch dann sichergestellt werden, wenn die Breite des thermoplastischen Verpackungsmaterials 9 sich verändert.

Aus Fig. 1 wird auch deutlich, dass das thermoplastische Verpackungsmaterial 9, für welches die Steuer- und/oder Regeleinrichtung S mittels der Sensorik 20 Informationen zur Breite erhält, erst zu einem späteren Zeitpunkt in den Schrumpftunnel 30 gelangt. Bewährt hat es sich daher, wenn die Steuer- und/oder Regeleinrichtung S bei der Einstellung der Schachtwände 32, 33 bzw. 34 eine Zeitdauer berücksichtigt, welche das thermoplastische Verpackungsmaterial 9 bzw. ein Abschnitt des thermoplastischen Verpackungsmaterials 9 nach Erkennen einer Ist-Position seiner seitlichen Außenkante 23 noch bis zum Eintritt in den Schrumpftunnel 30 benötigt.

Es kann somit sein, dass die Steuer- und/oder Regeleinrichtung S die relative Beabstandung der Schachtwände 32, 33 und 34 zueinander während eines laufenden Betriebes des Schrumpftunnels 30 im Rahmen einer Regelung bedarfsweise verstellt. Hierzu überprüft die Steuer- und/oder Regeleinrichtung S mittels der Sensorik 20 während des Aufschrumpfens des thermoplastischen Verpackungsmaterials 9 auf Artikel 15 kontinuierlich bzw. unterbrechungsfrei, ob die tatsächliche Breite des thermoplastischen Verpackungsmaterial 9 mit einer erwarteten Breite übereinstimmt und passt die relative Beabstandung der Schachtwände 32, 33 und 34 zueinander während des laufenden Betriebes des Schrumpftunnels 30 bedarfsweise an.

Die Fig. 2 zeigt eine schematische Seitenansicht der Ausführungsform einer Verpackungsvorrichtung 1 nach Fig. 1. Hierin ist nochmals der Speicher 3 zu erkennen, in welchem vorliegend zwei thermoplastisches Verpackungsmaterial 9 tragende Vorratsrollen 5 aufgenommen sind. Sofern der Vorrat an thermoplastischem Verpackungsmaterial 9 einer Vorratsrolle 5 erschöpft oder zumindest näherungsweise erschöpft ist, kann thermoplastisches Verpackungsmaterial 9 von der weiteren Vorratsrolle 5 abgewickelt werden. Die Vorratsrollen 5 bzw. der Speicher 3 befindet sich unterhalb einer für Artikel 15 vorgesehenen Transportebene.

Die Verpackungsvorrichtung 1 nach Fig. 2 umfasst zudem ein Gruppiermodul 40, welches die bereits in Fig. 1 dargestellten Zusammenstellungen an Artikeln 14 bilden kann. Die Zusammenstellungen an Artikeln 14 umfassen vorliegend genau sechs Artikel 15, können in weiteren Ausführungsformen jedoch auch beispielsweise genau vier Artikel 15, genau zwei Artikel 15 oder eine weitere Anzahl an Artikeln 15 umfassen.

Um die Zusammenstellungen an Artikeln 14 bilden zu können, umfasst das Gruppiermodul 40 mehrere parallel zueinander verlaufende Gassenbleche, zwischen welchen mehreren parallel zueinander verlaufenden Gassenblechen Artikel 15 in mehreren parallelen Reihen geführt werden. Über hier nicht dargestellte Schubstangen werden vorauseilende Artikel 15 kurzzeitig beschleunigt und gegenüber nachfolgenden Artikeln 15 abgetrennt, wodurch die Zusammenstellungen 14 gebildet werden.

An das Gruppiermodul 40 schließt das Einschlagmodul 25 an, welches entsprechend dem Ausführungsbeispiel nach Fig. 1 Zuschnitte 13 an thermoplastischem Verpackungsmaterial 9 abtrennt und auf die über das Gruppiermodul 40 gebildeten Zusammenstellungen an Artikeln 14 aufbringt.

Auch bei dem Ausführungsbeispiel nach Fig. 2 sind mindestens eine Sensorik 20 vorgesehen sowie eine Steuer- und/oder Regeleinrichtung S, mit welcher die mindestens eine Sensorik 20 in Verbindung steht. Aus Gründen der Übersichtlichkeit sind die mindestens eine Sensorik 20 und die Steuer- und/oder Regeleinrichtung S in Fig. 2 nicht mit dargestellt. Ein Erfassungsbereich der mindestens einen Sensorik 20 ist auch bei der Verpackungsvorrichtung 1 nach Fig. 2 auf eine Außenkante 23 (vgl. Fig. 1) des thermoplastischen Verpackungsmaterials 9 gerichtet und stellt der Steuer- und/oder Regeleinrichtungen Informationen über die jeweilige Ist-Position der Außenkante 23 bereit.

Die Steuer- und/oder Regeleinrichtung S kann sodann während eines laufenden Betriebes des Schrumpftunnels 30 eine Position mindestens einer in einem Innenraum des Schrumpftunnels 30 angeordnete Schachtwand 32, 33 bzw. 34 verstellen und hierbei die über die Sensorik 20 erhaltenen Informationen zur Ist-Position der Außenkante 23 berücksichtigen.

Die Darstellung der Fig. 2 zeigt auch, dass der Schrumpftunnel 30 ein Schrumpftunnelgehäuse 31 ausbildet, innerhalb welchen Schrumpftunnelgehäuses 31 die mindestens eine Schachtwand 32, 33 bzw. 34 angeordnet ist. Es kann hierbei sein, dass der Schrumpftunnel 30 genau eine Schachtwand 32, 33 bzw. 34 umfasst, wobei zwischen dem Schrumpftunnelgehäuse 31 und der genau einen Schachtwand 32, 33 bzw. 34 Artikel 15 mit aufgebrachtem thermoplastischem Verpackungsmaterial 9 durch den Schrumpftunnel 30 bewegt werden. In weiteren Ausführungsformen können mehrere Schachtwände 32, 33 bzw. 34 innerhalb des Schrumpftunnelgehäuses 31 angeordnet sein, welche mittels der Steuer- und/oder Regeleinrichtung bedarfsweise aktuatorisch eingestellt werden.

Die Fig. 3 zeigt eine beispielhafte Ausführungsform eines Schrumpfgebindes 7, wie es mit der erfindungsgemäßen Verpackungsvorrichtung 1 und mit dem erfindungsgemäßen Verfahren 100 hergestellt werden kann. Das Schrumpfgebinde 7 umfasst mehrere Artikel 15, welche durch Getränkebehälter 17 ausgebildet sind. Die mehreren Artikel 15 bzw. die mehreren Getränkebehälter 17 werden über thermoplastisches Verpackungsmaterial 9 zusammengehalten, welches über einen Schrumpftunnel 30 entsprechend Fig. 1 bzw. entsprechend Fig. 2 auf die Artikel 15 aufgeschrumpft wurde. Ein Schrumpfgebinde 7 nach Fig. 3 kann auch einen Griff besitzen, welcher in Fig. 2 nicht mit dargestellt ist und über welchen das Schrumpfgebinde 7 getragen werden kann.

Schließlich zeigt die Fig. 4 im Flussdiagramm einzelne aufeinanderfolgende Schritte, wie sie bei diversen Ausführungsformen des erfindungsgemäßen Verfahrens 100 vorgesehen sein können und mit diversen Ausführungsformen der erfindungsgemäßen Verpackungsvorrichtung 1 umgesetzt bzw. durchgeführt werden können. Mittels des Verfahrens 100 können Schrumpfgebinde 7 (vgl. Fig. 3) hergestellt werden.

Im Rahmen eines ersten Schrittes, auf welchen Ziffer 110 verweist, werden einer Steuer- und/oder Regeleinrichtung S Informationen zu einer Breite von thermoplastischem Verpackungsmaterial 9 bereitgestellt, über welche Breite sich das thermoplastische Verpackungsmaterial 9 senkrecht zu einer Bewegungsrichtung BR erstreckt, entlang welcher Bewegungsrichtung BR das thermoplastische Verpackungsmaterial 9 zu einem späteren Zeitpunkt durch einen Schrumpftunnel 30 bewegt wird.

Im zweiten Schritt 120 stellt die Steuer- und/oder Regeleinrichtung S unter Berücksichtigung der Informationen zur Breite des thermoplastischen Verpackungsmaterials 9 eine Position mindestens einer Schachtwand 32, 33, 34 des Schrumpftunnels 30 schräg und/oder senkrecht zur Bewegungsrichtung BR ein.

Im dritten Schritt 130 werden sodann Artikel 15 mit aufgebrachtem thermoplastischem Verpackungsmaterial 9 durch den Schrumpftunnel 30 entlang der mindestens einen Schachtwand 32, 33, 34 bewegt, wobei das thermoplastische Verpackungsmaterial 9 auf die Artikel 15 aufgeschrumpft wird.

Die Ausführungsformen, Beispiele und Varianten der vorhergehenden Absätze, die Ansprüche oder die Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen oder aus anderen zeichnerisch dargestellten Elementen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

### Bezugszeichenliste

- 1: Verpackungsvorrichtung
- 3: Speicher
- 5: Vorratsrolle
- 6: Schneid- und/oder Trenninstrument
- 7: Schrumpfgebinde
- 9: Thermoplastisches Verpackungsmaterial
- 11: Bahn an thermoplastischem Verpackungsmaterial
- 13: Zuschnitt an thermoplastischem Verpackungsmaterial
- 14: Zusammenstellung an Artikeln
- 15: Artikel
- 17: Getränkebehälter
- 20: Sensorik
- 22: Lichtschranke
- 25: Einschlagmodul
- 30: Schrumpftunnel
- 32: Schachtwand
- 33: Schachtwand
- 34: Schachtwand
- 40: Gruppiermodul
- 100: Verfahren
- 110: erster Verfahrensschritt
- 120: zweiter Verfahrensschritt
- 130: Dritter Verfahrensschritt

- BR: Bewegungsrichtung
- S: Steuer- und/oder Regeleinrichtung

## Patentansprüche

1. Verfahren (100) zum Herstellen von Schrumpfgebinden (7), bei welchem Verfahren vorgesehen ist, dass
- Artikel (15) mit aufgebrachtem thermoplastischem Verpackungsmaterial (9) durch einen Schrumpftunnel (30) entlang mindestens einer zum Einbringen von Schrumpfmedium in den Schrumpftunnel (30) ausgebildeten Schachtwand (32, 33, 34) bewegt werden, wobei das thermoplastische Verpackungsmaterial (9) auf die Artikel (15) aufgeschrumpft wird, das Verfahren **dadurch gekennzeichnet, dass**
- einer Steuer- und/oder Regeleinrichtung (S) Informationen zu einer Breite des thermoplastischen Verpackungsmaterials (9) sensorisch bereitgestellt werden, über welche Breite sich das thermoplastische Verpackungsmaterial (9) bei seiner Bewegung durch den Schrumpftunnel (30) senkrecht zu seiner Bewegungsrichtung (BR) erstreckt und wobei
- die Steuer- und/oder Regeleinrichtung (S) unter Berücksichtigung der Informationen zur Breite des thermoplastischen Verpackungsmaterials (9) eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, aktuatorisch einstellt.

2. Verfahren nach Anspruch 1, bei welchem die Informationen zur Breite des thermoplastischen Verpackungsmaterials (9) sensorisch bereitgestellt werden, indem
- mindestens eine mit der Steuer- und/oder Regeleinrichtung (S) gekoppelte Sensorik (20) wenigstens eine Ist-Position wenigstens einer in Bewegungsrichtung (BR) verlaufenden seitlichen Außenkante (23) des auf Artikel (15) aufgebrachten thermoplastischen Verpackungsmaterials (9) erkennt und/oder indem
- mindestens eine mit der Steuer- und/oder Regeleinrichtung (S) gekoppelte Sensorik (20) wenigstens eine Ist-Position wenigstens einer in Bewegungsrichtung (BR) verlaufenden seitlichen Außenkante (23) des bis dahin noch nicht auf Artikel (15) aufgebrachten thermoplastischen Verpackungsmaterials (9) erkennt.

3. Verfahren nach Anspruch 2, wobei es sich bei der mindestens einen mit der Steuer- und/oder Regeleinrichtung (S) gekoppelten Sensorik (20) um mindestens eine Lichtschranke (22) und/oder um mindestens ein Kamerasystem handelt.

4. Verfahren nach einem der Ansprüche 1 bis 3, bei welchem die Steuer- und/oder Regeleinrichtung (S) unter Berücksichtigung der Informationen zur Breite des thermoplastischen Verpackungsmaterials (9) eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, aktuatorisch einstellt, während der Schrumpftunnel (30) thermoplastisches Verpackungsmaterial (9) auf die Artikel (15) aufschrumpft.

5. Verfahren nach einem der Ansprüche 1 bis 4, bei welchem
- der Steuer- und/oder Regeleinrichtung (S) Informationen zur Breite des thermoplastischen Verpackungsmaterials (9) über den Zeitverlauf kontinuierlich sensorisch bereitgestellt werden und bei welchem Verfahren
- die Steuer- und/oder Regeleinrichtung (S) unter Berücksichtigung der über den Zeitverlauf kontinuierlich sensorisch bereitgestellten Informationen eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, bedarfsweise aktuatorisch einstellt, sofern die Steuer- und/oder Regeleinrichtung (S) mittels der kontinuierlich sensorisch bereitgestellten Informationen feststellt, dass eine Ist-Breite des thermoplastischen Verpackungsmaterials (9) von einer vorgegebenen Soll-Breite abweicht.

6. Verfahren nach einem der Ansprüche 1 bis 5, bei welchem
- der Steuer- und/oder Regeleinrichtung (S) Informationen zu einer Breite des bis dahin noch nicht in den Schrumpftunnel (30) eingetretenen thermoplastischen Verpackungsmaterials (9) sensorisch bereitgestellt werden, über welche Breite sich das bis dahin noch nicht in den Schrumpftunnel (30) eingetretene thermoplastische Verpackungsmaterial (9) bei seiner späteren Bewegung durch den Schrumpftunnel (30) senkrecht zu seiner Bewegungsrichtung (BR) erstreckt und bei welchem Verfahren
- die Steuer- und/oder Regeleinrichtung (S) unter Berücksichtigung der Informationen zur Breite des bis dahin noch nicht in den Schrumpftunnel (30) eingetretenen thermoplastischen Verpackungsmaterials (9) eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, aktuatorisch einstellt und hierbei eine Zeit berücksichtigt, welche das bis dahin noch nicht in den Schrumpftunnel (30) eingetretene thermoplastische Verpackungsmaterial (9) bis zu seinem Eintritt in den Schrumpftunnel (30) noch benötigt.

7. Verfahren nach einem der Ansprüche 1 bis 6, bei welchem
- die Steuer- und/oder Regeleinrichtung (S) anhand der sensorisch bereitgestellten Informationen überprüft, ob sich eine Ist-Breite des thermoplastischen Verpackungsmaterials (9) im Hinblick auf die Ist-Position der mindestens einen Schachtwand (32, 33, 34) innerhalb eines vorgegebenen Toleranzbereichs befindet und bei welchem
- die Steuer- und/oder Regeleinrichtung (S) eine Position der mindestens einen Schachtwand (32, 33, 34) lediglich dann schräg und/oder senkrecht zur Bewegungsrichtung (BR) einstellt, sofern der Toleranzbereich von der Ist-Breite des thermoplastischen Verpackungsmaterials (9) verlassen wird.

8. Verpackungsvorrichtung (1) zum Herstellen von Schrumpfgebinden (7), umfassend
- einen Schrumpftunnel (30) mit mindestens einer Schachtwand (32, 33, 34), welche mindestens eine Schachtwand (32, 33, 34) zum Einbringen von Schrumpfmedium in den Schrumpftunnel (30) ausgebildet ist und entlang welcher mindestens einen Schachtwand (32, 33, 34) Artikel (15) zum Aufschrumpfen von thermoplastischem Verpackungsmaterial (9) durch den Schrumpftunnel (30) bewegbar sind, die Verpackungsvorrichtung **gekennzeichnet durch**
- eine Steuer- und/oder Regeleinrichtung (S) und mindestens eine Sensorik (20), über welche mindestens eine Sensorik (20) der Steuer- und/oder Regeleinrichtung (S) Informationen zu einer Breite des thermoplastischen Verpackungsmaterials (9) bereitstellbar sind, über welche Breite sich das thermoplastische Verpackungsmaterial (9) bei seiner Bewegung durch den Schrumpftunnel (30) senkrecht zu seiner Bewegungsrichtung (BR) erstreckt und wobei
- die Steuer- und/oder Regeleinrichtung (S) mit wenigstens einem Aktor in Verbindung steht und derart ausgebildet ist, dass die Steuer- und/oder Regeleinrichtung (S) unter Berücksichtigung der über die mindestens eine Sensorik (20) bereitgestellten Informationen eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, über den wenigstens einen Aktor einstellen kann.

9. Verpackungsvorrichtung zum Herstellen von Schrumpfgebinden (7) nach Anspruch 8, bei welcher auf der Steuer- und/oder Regeleinrichtung (S) eine Anweisung hinterlegt ist, mittels welcher Anweisung die Steuer- und/oder Regeleinrichtung (S) eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, über den wenigstens einen Aktor während eines laufenden Betriebes des Schrumpftunnels (30) im Rahmen einer Regelung einstellen kann.

10. Verpackungsvorrichtung nach einem der Ansprüche 8 oder 9, bei welcher die mindestens eine Sensorik (20) durch mindestens eine Lichtschranke (22) und/oder durch mindestens ein Kamerasystem ausgebildet ist.

11. Verpackungsvorrichtung nach einem der Ansprüche 8 bis 10, bei welcher
- die mindestens eine Sensorik (20) derart positioniert ist, dass die mindestens eine Sensorik (20) wenigstens eine Ist-Position wenigstens einer in Bewegungsrichtung (BR) verlaufenden seitlichen Außenkante (23) des auf Artikel (15) aufgebrachten thermoplastischen Verpackungsmaterials (9) erkennen kann, so dass der Steuer- und/oder Regeleinrichtung (S) die jeweilige Ist-Position als Information zur Breite des thermoplastischen Verpackungsmaterials (9) bereitstellbar ist, über welche Breite sich das thermoplastische Verpackungsmaterial (9) bei seiner Bewegung durch den Schrumpftunnel (30) senkrecht zu seiner Bewegungsrichtung (BR) erstreckt und/oder bei welcher
- die mindestens eine Sensorik (20) derart positioniert ist, dass die mindestens eine Sensorik (20) wenigstens eine Ist-Position wenigstens einer in Bewegungsrichtung (BR) verlaufenden seitlichen Außenkante (23) des bis dahin noch nicht auf Artikel (15) aufgebrachten thermoplastischen Verpackungsmaterials (9) erkennen kann, so dass der Steuer- und/oder Regeleinrichtung (S) die jeweilige Ist-Position als Information zur Breite des thermoplastischen Verpackungsmaterials (9) bereitstellbar ist, über welche Breite sich das thermoplastische Verpackungsmaterial (9) bei seiner Bewegung durch den Schrumpftunnel (30) senkrecht zu seiner Bewegungsrichtung (BR) erstreckt.

12. Verpackungsvorrichtung nach Anspruch 8 bis 11, bei welcher
- die mindestens eine Sensorik (20) derart positioniert ist, dass die mindestens eine Sensorik (20) der Steuer- und/oder Regeleinrichtung (S) Informationen zu einer Breite des bis dahin noch nicht in den Schrumpftunnel (30) eingetretenen thermoplastischen Verpackungsmaterials (9) bereitstellen kann und bei welcher
- die Steuer- und/oder Regeleinrichtung (S) derart ausgebildet ist, dass die Steuer- und/oder Regeleinrichtung (S) bei einer Einstellung der mindestens einen Schachtwand (32, 33, 34) schräg und/oder senkrecht zur Bewegungsrichtung (BR) eine Zeit berücksichtigen kann, welches das bis dahin noch nicht in den Schrumpftunnel (30) eingetretene thermoplastische Verpackungsmaterial (9) bis zu einem Eintritt in den Schrumpftunnel (30) noch benötigt.

13. Verpackungsvorrichtung nach einem der Ansprüche 8 bis 12, umfassend
- wenigstens einen vorzugsweise als Kamera ausgebildeten optischen Detektor, welcher mit der Steuer- und/oder Regeleinrichtung (S) in Verbindung steht, wobei die Steuer- und/oder Regeleinrichtung (S) das auf Artikel (15) aufgeschrumpfte thermoplastische Verpackungsmaterial (9) mittels des wenigstens einen vorzugsweise als Kamera ausgebildeten optischen Detektor auf das Vorhandensein vorgegebener Gütekriterien überprüfen kann und
- wobei auf der Steuer- und/oder Regeleinrichtung (S) Erfahrungswerte hinterlegt sind, welche einer im Rahmen einer Überprüfung festgestellten Abweichung eines Gütekriteriums von einem vorgegebenem Soll-Gütekriterium eine Position der mindestens einen Schachtwand (32, 33, 34) zuordnen und wobei vorgesehen ist, dass
- die Steuer- und/oder Regeleinrichtung (S) unter Berücksichtigung der Erfahrungswerte, welche den im Rahmen der Überprüfung mittels des wenigstens einen vorzugsweise als Kamera ausgebildeten optischen Detektors festgestellten Gütekriterien zugeordnet sind, eine Position der mindestens einen Schachtwand (32, 33, 34) schräg und/oder senkrecht zur Bewegungsrichtung (BR), entlang welcher Bewegungsrichtung (BR) das thermoplastische Verpackungsmaterial (9) durch den Schrumpftunnel (30) bewegt wird, über den wenigstens einen Aktor einstellen kann.

14. Verpackungsvorrichtung nach Anspruch 8 bis 13, umfassend mindestens eine vorzugsweise als Industrieroboter ausgebildete Handhabungseinrichtung, an welcher vorzugsweise als Industrieroboter ausgebildeten Handhabungseinrichtung die mindestens eine Sensorik (20) angeordnet ist, so dass die mindestens eine Sensorik (20) über die vorzugsweise als Industrieroboter ausgebildete Handhabungseinrichtung bewegt werden kann.
